Europäisches Patentamt

European Patent Office

Office européen des brevets

(19)

(11) **EP 1 124 121 A2**

(12) **EUROPÄISCHE PATENTANMELDUNG**

(43) Veröffentlichungstag:
16.08.2001 Patentblatt 2001/33

(51) Int Cl.⁷: **G01L 5/20**

(21) Anmeldenummer: 01102644.0

(22) Anmeldetag: 07.02.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.02.2000 DE 10005553**

(71) Anmelder: **ROBERT BOSCH GMBH**
**70442 Stuttgart (DE)**

(72) Erfinder:
• **Liebemann, Edwin**
**71229 Leonberg (DE)**
• **Arndt, Dietmar**
**71706 Markgroeningen (DE)**

(54) **Einrichtung zur Ermittlung einer wirksamen Umfangskraft an einem Reifen eines Fahrzeuges**

(57)    Es wird eine Einrichtung zur Ermittlung einer wirksamen Umfangskraft an einem Reifen (9) eines Fahrzeugrades vorgeschlagen. Das Fahrzeugrad weist dazu eine in einer Reifenseitenfläche (1) des Reifens (9) angeordnete erste Geberstrukturierung (2) und mindestens eine weitere, gegenüber der ersten Geberstrukturierung (2) radial weiter innen liegende zweite Geberstrukturierung (3) auf. Daneben ist mindestens eine fahrzeugfest angeordnete, mit den Geberstrukturierungen (2, 3) zusammenwirkende Sensiereinrichtung (11) vorgesehen, die mindestens zwei, von der Achse (16) gleich weit entfernte Außensensorelemente (4, 4') mit einem ersten Abstand ($b_2$) und mindestens zwei, von der Achse (16) gleich weit entfernte, gegenüber den Außensensorelementen (4, 4') radial weiter innen liegende Innensensorelemente (5, 5') mit einem zweiten Abstand ($b_1$) aufweist. Die Abstände ($b_1$, $b_2$) und die Geberstrukturierungen (2, 3) sind derart aufeinander abgestimmt, daß zu dem Zeitpunkt, zu dem das erste Außensensorelement (4) und das erste Innensensorelement (5) betragsmäßig ein Signalmaximum detektieren, das zweite Außensensorelement (4') und das zweite Innensensorelement (5') betragsmäßig ein Signalminimum, insbesondere einen Signalnulldurchgang, detektieren.

*Fig. 2*

EP 1 124 121 A2

**Beschreibung**

Die Erfindung betrifft eine Einrichtung zur Ermittlung einer wirksamen Umfangskraft an einem Reifen eines Fahrzeuges nach der Gattung des Hauptanspruches.

Stand der Technik

Aus DE 44 35 161 A1 ist ein Seitenwandtorsionssensor bekannt, der in die Seitenwand eines Reifens integriert ist und dessen Funktion auf elastischen Verformungen des Reifens beim Übertragen von Kräften beruht. So wird der Reifen eines Fahrzeuges bei einer Antriebs- oder Bremskraft in Fahrtrichtung in sich tordiert, was gleichzeitig mit einer Spannung in dem Reifen verbunden ist. Darüberhinaus ist aus der genannten Schrift bereits bekannt, auch eine Kraft, die quer zum Fahrzeug bzw. dessen Fahrtrichtung gerichtet ist, durch in die Reifenseitenwand integrierte Geberelemente zu bestimmen.

Der Magnetfeldsensor ist dabei gemäß DE 44 35 161 A1 in Form eines Magnetfeldsensorpaares ausgebildet, wobei ein Sensor achsnah angebracht ist, der andere achsfern. Aus dem Phasenversatz der von diesen beiden Sensoren detektierten Signale kann somit auf die bei einer wirksamen Umfangskraft auftretende Torsion des Reifens geschlossen werden.

Zur Messung einer Kraft quer zum Fahrzeug kann weiter zusätzlich die Amplitude des Magnetfeldsignales herangezogen werden, da im Fall einer solchen Kraft sich der Reifen auch quer zur Fahrzeugrichtung tordiert, so daß die Amplitude des von dem Magnetfeldsensor detektierten Signals nahezu exponentiell mit dem Abstand des Sensorelementes von dem zugehörigen Magnetisierungsstreifen bzw. dem zugehörigen Geberelement abfällt.

In Weiterführung von DE 44 35 161 A1 wird in DE 196 46 251 A1 bereits vorgeschlagen, die fahrzeugseitige Seitenwand des Reifens eines Fahrzeuges mit Geberelementen in Form von Magnetisierungsstreifen zu versehen, die gleichmäßig über den gesamten Umfang des Reifens verteilt sind, und die als ABS- oder Seitenwandtorsionsgeber einsetzbar sind. Die Magnetisierungsstreifen werden dazu durch Einbringen von hartmagnetischen Partikeln in die Seitenflanke des Reifens derart strukturiert erzeugt, daß die Seitenflanke in maschinell detektierbarer Weise magnetisiert ist, und daß gleichzeitig die Magnetisierung radwinkelabhängig unterschiedliche Intensität und/oder Polung aufweist.

Weiter ist auch bereits bekannt, ca. 20 der in DE 196 46 251 A1 vorgeschlagenen Magnetisierungsstreifen mit einer Feldamplitude von einigen mT und einem Abstand von etwa 10 mm derart auszubilden und über die Seitenwandfläche des Reifens derart zu verteilen, daß die Magnetfeldamplitude bei Rotation des Rades an einer vorgegebenen Position sinusartig variiert. Diese sinusartige Variation des Magnetfeldes kann dann mit Hilfe eines Magnetfeldsensors, beispielsweise einer Hall-Sonde, in eine elektrische Spannung umgesetzt werden.

Vorteile der Erfindung

Die erfindungsgemäße Einrichtung zur Ermittlung einer zu einer wirksamen Umfangskraft proportionalen Größe an einem Reifen eines Fahrzeuges hat gegenüber dem Stand der Technik den Vorteil, daß damit die Meßgenauigkeit gegenüber bekannten Lösungen wesentlich erhöht wird. Weiter ist es mit der erfindungsgemäßen Einrichtung nunmehr möglich, die Fahrtrichtung des Fahrzeuges stets eindeutig zu erkennen, so daß Mehrdeutigkeiten bei der Bestimmung der Umfangskraft ausgeschlossen werden.

Darüberhinaus hat die erfindungsgemäße Einrichtung den Vorteil, daß die Sensiereinrichtung auch dann eine hohe Empfindlichkeit und Meßgenauigkeit aufweist, wenn sich ein Außensensorelement und das zugehörige, auf der Verbindungslinie zwischen Reifenmittelpunkt und dem betreffenden Außensensorelement gelegene Innensensorelement gerade in einem Magnetfeldmaximum bzw. einem Magnetisierungsmaximum befindet.

Auf diese Weise wird der der Lehre gemäß DE 44 35 160 A1 anhaftende Nachteil überwunden, daß dort nur dann eine gute Auflösung bzw. Meßgenauigkeit gegeben ist, wenn sich die beiden zusammenwirkenden Sensoren (Außensensor/Innensensor) gerade im Bereich eines Magnetfeldnulldurchganges bzw. eines Magnetisierungsnulldurchganges, hervorgerufen durch eine entsprechende, den Sensorelementen gerade gegenüber befindliche Strukturierung der Geberelemente, befinden.

Vorteilhafte Weiterbildungen der Erfindung ergeben sich aus den in den Unteransprüchen genannten Maßnahmen.

So ist besonders vorteilhaft, daß mit einer Weiterbildung der erfindungsgemäßen Einrichtung nunmehr sowohl die Amplitude einer Magnetisierung bzw. eines Magnetfeldes bestimmt werden kann, als auch eindeutig die Phase bzw. Phasenverschiebung der einzelnen Sensorelemente in der Sensiereinrichtung bezüglich der magnetisierten Reifenseitenwand. Insbesondere ist die Genauigkeit dieser Phasenbestimmungen nun auch nicht mehr von der aktuellen Winkelposition des Fahrzeugrades abhängig, sondern über dessen gesamten Umfang hin konstant. Somit lassen sich nun auch Raddrehzahlen bei geringen Fahrzeuggeschwindigkeiten bestimmen, da man nicht mehr nur auf die Detektion von Nulldurchgängen angewiesen ist.

Eine besonders vorteilhafte Ausgestaltung der Erfindung ergibt sich, wenn die Reifenseitenwand zumindest bereichsweise eine strahlenförmige, zum Reifenmittelpunkt ausgerichtete Strukturierung in Form von umlaufenden, periodischen Magnetisierungsstreifen aufweist. Diese Magnetisierungsstreifen sind dabei vorteilhaft derart magnetisiert, daß die von der Sensiereinrichtung abgegebenen Signale einen zumindest näherungsweise sinus- bzw. cosinusförmigen Signalverlauf aufweisen, der gegebenenfalls mit einem Offset versehen sein kann.

Um neben der Ermittlung einer Umfangskraft parallel (d.h. in x-Richtung) bzw. einer Kraft quer zur Fahrtrichtung (d.h. in y-Richtung) auch eine vertikal (d. h. in z-Richtung) gerichtete Aufstands- oder Normalkraft detektieren zu können, ist es darüber hinaus vorteilhaft, wenn mindestens zwei, bezogen auf den Reifenmittelpunkt einander gegenüber angeordnete Sensiereinrichtungen vorgesehen sind. Diese Sensiereinrichtungen sind dabei bei einem unbelasteten Zustand des Reifens von dem Reifenmittelpunkt oder alternativ der Achsrichtung jeweils gleich weit entfernt. In diesem Fall ist weiterhin vorteilhaft, wenn die Verbindungslinie von zwei Sensiereinrichtungen parallel zu der Fahrtrichtung des Fahrzeuges orientiert ist, da die Meßgenauigkeit der vertikalen Kraft dann besonders hoch ist.

Vorteilhaft ist überdies auch eine Anordnung von vier Sensiereinrichtungen, die paarweise einander gegenüber liegend angeordnet sind, und deren Verbindungslinien senkrecht aufeinander stehen.

Zeichnungen

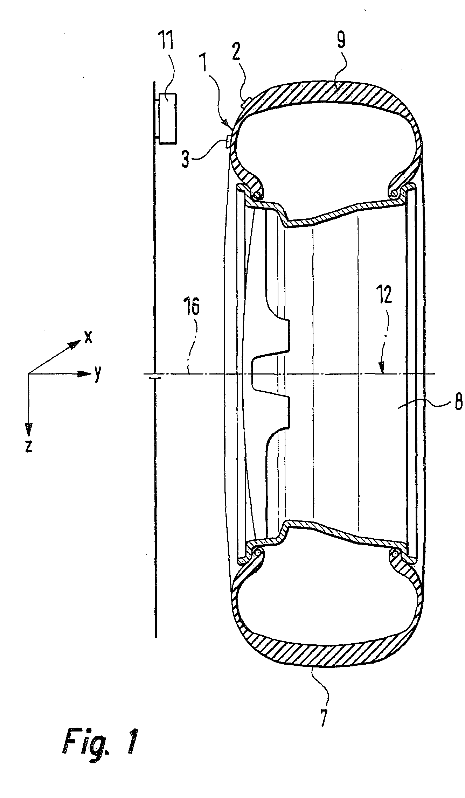

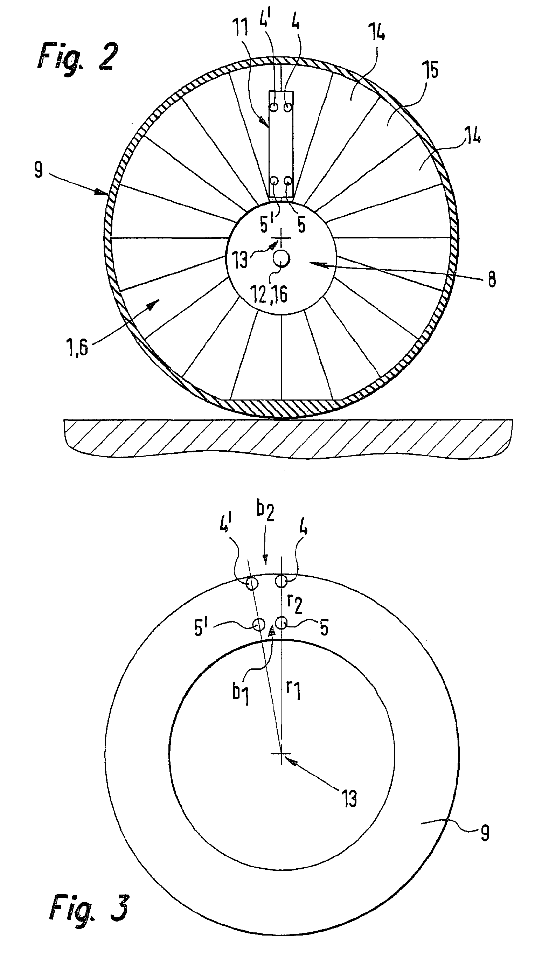

Die Erfindung wird anhand der Zeichnung und der nachfolgenden Beschreibung näher erläutert. Es zeigt Figur 1 eine Prinzipskizze eines Fahrzeugreifens, der mit einem Fahrzeug verbunden ist, Figur 2 eine Seitenansicht der Innenseitenfläche des Reifens gemäß Figur 1 mit einer Sensiereinrichtung und Figur 3 eine schematische Zeichnung eines Reifens mit einer Sensiereinrichtung mit vier Sensorelementen.

Ausführungsbeispiele

Die Figur 1 zeigt einen Reifen 9 auf einer Felge 8, wie er in ähnlicher Form bereits aus DE 44 35 160 A1 und in Weiterführung dazu aus DE 196 46 251 A1 bekannt ist.

Der Reifen 9 weist dabei eine Lauffläche 7 auf und ist mit einer Achse 16, die eine Achsrichtung 12 definiert, mit einem Fahrzeug verbunden. Weiter befinden sich auf der dem Fahrzeug zugewandten Reifenseitenfläche 1 eine erste Geberstrukturierung 2 und eine weitere, gegenüber der ersten Geberstrukturierung 2 radial weiter innen liegende zweite Geberstrukturierung 3. Gegenüber den Geberstrukturierungen 2, 3 ist eine mit den Geberstrukturierungen 2, 3 zusammenwirkende Sensiereinrichtung 11 angeordnet, die zur Abgabe von elektronischen Signalen an eine nicht dargestellte Steuereinheit vorgesehen ist. In Figur 1 ist weiter angedeutet, daß die Achsrichtung 12 parallel zu der y-Richtung und die Fahrtrichtung parallel der x-Richtung verläuft. Die Aufstands- oder Normalkraft ist vertikal, d.h. parallel zu der z-Richtung orientiert.

Die Figur 2 zeigt eine Seitenansicht der Figur 1, wobei die Innenseite der Reifenseitenfläche 1 sichtbar ist. Dabei sei betont, daß Figur 2 lediglich eine schematische Darstellung des Reifens 9 auf der Felge 8 ist, wobei zur besseren Darstellung die Felge 8 unverhältnismäßig klein und die Reifenseitenfläche 1 unverhältnismäßig groß gezeichnet ist.

Die Figur 2 zeigt weiter, daß der Reifen 9 aufgrund der auf das Fahrzeug wirkenden Aufstands- oder Normalkraft in z-Richtung auf einer Fahrbahn aufliegt, so daß der Reifenmittelpunkt 13 gegenüber der Achsrichtung 12 geringfügig nach oben verschoben ist. Im unbelasteten Zustand des Reifens 9 fällt die Achsrichtung 12 mit dem Reifenmittelpunkt 13 zusammen. In Figur 2 ist zudem die Sensiereinrichtung 11 gemäß Figur 1 in rückseitiger Draufsicht dargestellt, wobei zur Erläuterung die darin befindlichen bzw. integrierten Sensorelemente 4, 4', 5 und 5' lediglich punktförmig angedeutet sind.

Im einzelnen ist gemäß Figur 2 die Reifenseitenfläche 1 mit strahlenförmigen, von dem Reifenmittelpunkt 13 ausgehenden, bzw. auf diesen hin orientierten Magnetisierungsstreifen 14, 15 versehen. Diese Magnetisierungsstreifen 14, 15 können beispielsweise, wie aus DE 196 46 251 A1 bekannt, in Form von in den Reifengummi eingebrachten magnetisierbaren hartmagnetischen Materialien erzeugt werden. In Figur 2 sind insgesamt zwanzig derartige Magnetisierungsstreifen 14, 15 auf dem gesamten Umfang der Reifenseitenfläche 1 unmittelbar benachbart und aneinander angrenzend angeordnet. Die Magnetisierungsstreifen 14 bzw. 15 unterscheiden sich darüber hinaus dadurch, daß die Richtung der jeweiligen Magnetisierung benachbarter Streifen entgegengerichtet ist. Die Magnetisierung der einzelnen Magnetisierungsstreifen 14, 15 ist gleichzeitig derart strukturiert, daß ein Sensorelement 4, 4', 5, 5' bei einer Rotation des Fahrzeugrades im unbelasteten Zustand einen zumindest näherungsweise sinus- oder cosinusförmigen Signalverlauf abgibt, der gegebenenfalls mit einem Offset versehen ist. Dies wird insbesondere dadurch erreicht, daß die Magnetisierung der Magnetisierungsstreifen 14, 15 entlang mindestens einer zu dem Reifenmittelpunkt 13 konzentrisch auf der Reifeninnenseitenfläche verlaufenden Kreislinie sinus- oder cosinusförmig periodisch moduliert. Die Periode dieser Modulation entspricht dabei einer Rotation des Reifens 9 bei der die Sensiereinrichtung 11 zwei benachbarte Magnetisierungsstreifen 14, 15 überstreicht, d.h. im konkreten Fall mit 20 Magnetisierungstreifen einer Rotation des Reifens 9 um einen Radwinkel von $360°/10 = 36°$.

Weitere Einzelheiten zu der Magnetisierung der Reifenseitenfläche 1 und mögliche alternative Ausbildungen der Geberstrukturierungen 2, 3, die ebenfalls für die erfindungsgemäße Einrichtung eingesetzt werden können, sind aus DE 196 46 251 A1 bekannt.

Innerhalb der Sensiereinrichtung 11 befinden sich die Sensorelement 4, 4', 5, 5', die im konkreten Beispiel als bekannte Hall-Sensorelemente ausgebildet sind. Im einzelnen sind in der Sensiereinrichtung 11 im erläuterten Beispiel zwei, von der Achsrichtung 12 bzw. der Achse 16 gleich weit entfernte Außensensorelemente 4, 4' vorgesehen, die einen ersten Abstand $b_2$ voneinander aufweisen, und weiterhin zwei, ebenfalls von der Achse 16 oder der Achsrichtung 12 gleich weit entfernte, gegenüber den Außensensorelementen 4, 4' jedoch radial weiter innen liegende Innensensorelemente 5, 5' vorgesehen, die einen zweiten Abstand $b_1$ voneinander aufweisen.

Der erste Abstand $b_2$ und der zweite Abstand $b_1$, sowie die erste und die zweite Geberstrukturierung 2, 3, die im konkreten Beispiel durch die erläuterte Strukturierung der Reifenseitenfläche 1 in Form von strahlenförmigen Magnetisierungsstreifen 14, 15 in Form einer Geberstruktur 6 gegeben ist, sind weiter derart aufeinander abgestimmt, daß zu dem Zeitpunkt, zu dem das erste Außensensorelement 4 und das erste Innensensorelement 5 bei einer Rotation des Fahrzeugrades bzw. des Reifens 9 zumindest näherungsweise betragsmäßig ein Signalmaximum aufgrund einer entsprechenden Magnetisierung eines die Sensorelemente 4, 5 passierenden Magnetisierungsstreifens 14, 15 detektieren, das zugeordnete zweite Außensensorelement 4' und das zugeordnete zweite Innensensorelement 5' zumindest näherungsweise jeweils betragsmäßig ein Signalminimum, insbesondere einen Nulldurchgang des Sensorsignals, hervorgerufen durch die Magnetisierung eines die Sensorelemente 4, 5 passierenden Magnetisierungsstreifen 14, 15, detektieren.

Aufgrund der sinusförmigen Modulation der Magnetisierung in den Magnetierungsstreifen 14, 15 bedeutet die derart definierte Abstimmung der Abstände $b_1$, $b_2$ der Innensensorelemente 5, 5' bzw. der Außensensorelemente 4, 4', daß diese jeweils ein Meßsignal mit einer Phasenverschiebung von 90° gegeneinander, d.h. erstes Außensensorelement 4 gegenüber erstem Innensensorelement 5 und zweites Außensensorelement 4' gegenüber zweitem Innensensorelement 5', erzeugen.

Die Figur 3 erläutert, wie die Abstände $b_1$ und $b_2$ konkret zu berechnen sind. Dazu sei die Reifenseitenfläche 1 gemäß Figur 2 in n unmittelbar benachbarte, gleichartig ausgebildete, strahlenförmig von dem Reifenmittelpunkt 13 ausgehende Magnetisierungsstreifen 14, 15 unterteilt. Bei einem Radialabstand $r_1$ des ersten und des zweiten Innensensorelementes 5, 5' von dem Reifenmittelpunkt 13 ergibt sich somit ein Abstand der Innensensorelemente 5, 5' voneinander, der einer vorgegebenen Sollphasenverschiebung von 90° entspricht, dadurch, daß man diese Sensorelemente 5, 5' in einem zweiten Abstand $b_1$ gemäß

$$b_1 = \frac{2 \pi r_1}{4 n}$$

voneinander anordnet.

Bei der Berechnung des zweiten Abstandes $b_1$ der Innensensorelemente 5, 5' gemäß der vorstehenden Formel wurde dabei vernachlässigt, daß damit eigentlich die Bogenlänge des zugehörigen Kreissegmentes berechnet wird. Diese Bogenlänge ist bei den für die Praxis relevanten Parametern in der obengenannten Formel jedoch näherungsweise gleich dem Abstand der Innensensorelemente 5, 5'. Andererseits ist es für einen Fachmann natürlich ohne weiteres möglich, diese Näherung bei Bedarf zu vermeiden, indem er, ausgehend von der vorstehenden Formel, aus der damit eigentlich berechneten Bogenlänge des zugehörigen Kreissegmentes die Länge der jeweiligen Kreissehne berechnet, die dann genau dem zweiten Abstand $b_1$ der Innensensorelemente 5, 5' entspricht.

Im erläuterten Beispiel beträgt der Radialabstand $r_1$ ca. 0,25 m und die Anzahl der insgesamt über die Reifenseitenfläche verteilten Magnetisierungsstreifen 20. Damit ergibt sich ein zweiter Abstand $b_1$ von 19,6 mm.

Die vorstehende, am Beispiel der Innensensorelemente 5, 5' erläuterte Berechnung des zweiten Abstandes $b_1$ ist in analoger Weise ebenso für die Berechnung des ersten Abstandes $b_2$ der Außensensorelemente 4, 4' vorzunehmen. Aufgrund des vergrößerten Radialabstandes $r_2$ der Außensensorelemente 4, 4' gegenüber dem Radialabstand $r_1$ ergibt sich dabei stets ein erster Abstand $b_2$ der größer als der zweite Abstand $b_1$ ist.

Ist beispielsweise der Radialabstand $r_2$ 0,3 m, so ergibt sich für den ersten Abstand $b_2$ ein Wert von 23,6 mm.

Durch die in der erläuterten Weise vorgenommene Anordnung der in der Sensiereinrichtung 11 integrierten Außensensorelemente 4, 4' bzw. der in diese integrierten Innensensorelemente 5, 5' detektieren die Außensensorelemente 4, 4' und die Innensensorelemente 5, 5' das durch die Magnetisierung der Reifeninnenseitenfläche 1 erzeugte Magnetfeld jeweils gegeneinander um 90° phasenverschoben.

Die weitere Auswertung der von den einzelnen Sensorelementen 4, 4', 5, 5' erzeugten, und an die Sensiereinrichtung 11 abgegebenen Signale erfolgt dann mittels einer an sich bekannten Auswerteeinheit bzw. Steuereinheit, die mit der Sensiereinrichtung 11 in Verbindung steht, und mittels der ein aufgrund der wirksamen Umfangskraft entstehender Verschiebungswinkel α zwischen den Geberstrukturierungen 2, 3 als Funktion der Zeit ermittelbar ist.

Da die Geberstrukturierungen 2, 3 im konkret erläuterten Beispiel durch die Geberstruktur 6 in Form von strahlenförmigen Magnetisierungsstreifen 14, 15 gegeben ist, führt eine wirksame Umfangskraft zu einer Torsion des Reifens 9, die im äußeren Bereich des Reifens, d.h. im radial von dem Reifenmittelpunkt 13 weiter entfernten Bereich ausgeprägter ist als in den weiter innen liegenden Bereichen. Somit tritt, wie bereits aus DE 44 35 160 A1 bekannt, eine Phasenverschiebung zwischen den Sensorsignalen des ersten Außensensorelementes 4 zu dem ersten Innensensorelement 5 und eine Phasenverschiebung der Signale des zweiten Außensensorelementes 4' zu dem zweiten Innensesorelement 5' auf.

Im konkreten Beispiel ist die Geberstrukturierung 2 bzw. 3 durch eine Geberstruktur 6 in Form der erläuterten Magnetisierungsstreifen 14, 15 gegeben, deren Magnetfeld beispielsweise mittels Hall-Sensoren als Sensorelemente 4, 4', 5, 5' ausgewertet wird. Es ist jedoch offensichtlich, daß anstelle eines Magnetfeldes auch andere physikalische Größen eingesetzt werden können. So kann beispielsweise anstelle einer strukturierten Magnetisierung als Geberstruktur 6 auch eine strukturierte Metallisierung eingesetzt werden. Darüberhinaus kann es bei speziellen Anwendungen auch ausreichend sein, wenn die Magnetisierungsstreifen 14, 15 jeweils in sich homogen magnetisiert sind, wobei jedoch benachbarte Magnetisierungsstreifen 14, 15 dann eine entgegengesetzte Magnetisierungsrichtung aufweisen. Weiterhin ist es auch möglich, eine Geberstruktur 6 gemäß Figur 2 zu erzeugen, wobei jedoch lediglich die Streifen 14 eine Magnetisierung aufweisen, während die Streifen 15 unmagnetisch sind.

Im übrigen ist klar, daß die erreichbare Meßgenauigkeit auch von der Anzahl der Magnetisierungsstreifen 14, 15 abhängig ist. Typischerweise werden 10 bis 100 Magnetisierungsstreifen über die Reifenseitenfläche 1 verteilt.

Hinsichtlich weiterer Details des erläuterten Ausführungsbeispiels sei zudem auf DE 44 35 160 A1 und DE 196 46 251 A1 verwiesen.

Ein weiteres Ausführungsbeispiel der Erfindung sieht in Weiterführung des mit Hilfe der Figur 2 erläuterten Ausführungsbeispiels vor, daß anstelle lediglich einer Sensiereinrichtung 11 mindestens zwei, bezogen auf den Reifenmittelpunkt 13 einander gegenüber angeordnete, von dem Reifenmittelpunkt 13 oder der Achsrichtung 12 jeweils insbesondere gleich weit entfernte Sensiereinrichtungen 11 vorgesehen sind. Diese beiden Sensiereinrichtungen 11 sind dann jedoch einzeln jeweils vollständig analog der vorstehend erläuterten Sensiereinrichtung 11 ausgebildet.

Besonders bevorzugt sind die beiden Sensiereinrichtungen 11 in diesem zweiten Ausführungsbeispiel fahrzeugfest derart einander gegenüber angeordnet, daß ihre Verbindungslinie parallel zu der Fahrtrichtung des Fahrzeuges ist, d.h. parallel zu der x-Richtung gemäß Figur 1. Eine derartige Anordnung von zwei Sensiereinrichtungen 11 erlaubt es, neben einer wirksamen Umfangskraft gleichzeitig auch eine in z-Richtung wirkende Aufstands- oder Normalkraft zu bestimmen, da eine derartige Kraft in den beiden Sensiereinrichtungen 11 Meßsignale mit unterschiedlichem Vorzeichen hervorruft.

Diese Meßsignale mit unterschiedlichem Vorzeichen sind aufgrund der gewählten Geberstruktur 6 in Form von Magnetierungsstreifen 14, 15 und der erläuterten sinus- oder cosinusförmigen Modulation der Magnetisierung auf einer zu dem Reifenmittelpunkt 13 auf der Reifenseitenfläche 1 konzentrisch verlaufenden Kreislinie zu der wirkenden Aufstands- oder Normalkraft proportional.

Sofern man dann noch zusätzlich, wie aus DE 44 35 160 A1 bekannt, die Amplitude des Meßsignals mindestens eines der Sensorelemente 4, 4', 5, 5' auswertet, die bekanntermaßen proportional zu einer in y-Richtung wirkenden Querkraft ist, erhält man somit eine vollständige Information der als Funktion der Zeit auf den Reifen 9 in die Richtungen x, y und z wirkenden Kräfte.

**Patentansprüche**

1. Einrichtung zur Ermittlung einer zu einer wirksamen Umfangskraft proportionalen Größe an einem Reifen (9) eines Fahrzeugrades, wobei das Fahrzeugrad mindestens eine in einer Reifenseitenfläche (1) des Reifens (9) zumindest bereichsweise angeordnete erste Geberstrukturierung (2) und zumindest bereichsweise mindestens eine weitere, gegenüber der ersten Geberstrukturierung (2) radial weiter innen liegende zweite Geberstrukturierung (3) aufweist, und wobei weiter mindestens eine fahrzeugfest angeordnete, mit den Geberstrukturierungen (2, 3) zusammenwirkende Sensiereinrichtung (11) zur Abgabe von Signalen vorgesehen ist, **dadurch gekennzeichnet,** daß die Sensiereinrichtung (11) zumindest zwei, von der Achse (16) gleich weit entfernte Außensensorelemente (4, 4') mit einem ersten Abstand ($b_2$) und zumindest zwei, von der Achse (16) gleichweit entfernte, gegenüber den Außensensorelementen (4, 4') radial weiter innen liegende Innensensorelemente (5, 5') mit einem zweiten Abstand ($b_1$) aufweist, und daß der erste Abstand ($b_2$) und der zweite Abstand ($b_1$) sowie die erste und die zweite Geberstrukturierung (2, 3) derart aufeinander abgestimmt sind, daß zu dem Zeitpunkt, zu dem das erste Außensensorelement (4) und das erste Innensensorelement (5) zumindest näherungsweise betragsmäßig ein Signalmaximum detektieren, das zweite Außensensorelement (4') und das zweite Innensensorelement (5') zumindest näherungsweise betragmäßig ein Signalminimum, insbesondere einen Signalnulldurchgang, detektieren.

2. Einrichtung nach Anspruch 1, dadurch gekennzeichnet, daß aus den von der Sensiereinrichtung (11) abgegebenen Signalen mittels einer Auswerteeinheit ein aufgrund der wirksamen Umfangskraft entstehender Verschiebungswinkel ($\alpha$) zwischen den Geberstrukturierungen (2, 3) als Funktion der Zeit ermittelbar ist.

3. Einrichtung nach Anspruch 1 oder 2, dadurch gekennzeichnet, daß die erste und/oder die zweite Geberstrukturierung (2, 3) eine strukturierte Magnetisierung oder strukturierte Metallisierung zumindest eines Bereiches der Reifenseitenfläche (1) ist.

4. Einrichtung nach Anspruch 1 oder 3, dadurch gekennzeichnet, daß die erste und/oder die zweite Geberstrukturierung (2, 3) zumindest bereichsweise eine strahlenförmige, zum Reifenmittelpunkt (13) ausgerichtete Strukturierung der Reifenseitenfläche (1) ist.

5. Einrichtung nach Anspruch 1 oder 4, dadurch gekennzeichnet, daß die erste und/oder zweite Geberstrukturierung eine auf der Reifenseitenfläche (1) umlaufende periodische Anordnung von Magnetisierungsstreifen (14, 15) oder Metallisierungsstreifen ist.

6. Einrichtung nach mindestens einem der vorangehenden Ansprüche, dadurch gekennzeichnet, daß die Magnetisierungsstreifen (14, 15) derart magnetisiert sind, daß die von der Sensiereinrichtung (11) abgegebenen Signale einen zumindest näherungsweise sinus- oder cosinusförmigen Signalverlauf aufweisen, der gegebenenfalls mit einem Offset versehen ist.

7. Einrichtung nach mindestens einem der vorangehenden Ansprüche, dadurch gekennzeichnet, daß die erste und/oder die zweite Geberstrukturierung (2, 3) eine umlaufende periodische Anordnung von aneinander angrenzenden Magnetisierungsstreifen (14, 15) ist, wobei die Magnetisierung der Magnetisierungsstreifen (14, 15) derart ausgebildet ist, daß sie entlang zumindest einer konzentrisch zu dem Reifenmittelpunkt (13) auf der Reifenseitenfläche (1) verlaufenden Kreislinie zumindest näherungsweise sinusförmig variiert.

8. Einrichtung nach mindestens einem der vorangehenden Ansprüche, dadurch gekennzeichnet, daß die erste und/oder die zweite Geberstrukturierung (2, 3) eine umlaufende periodische Anordnung von aneinander angrenzenden Magnetisierungsstreifen (14, 15) ist, wobei benachbarte Magnetisierungsstreifen (14, 15) eine entgegengerichtete Magnetisierungsrichtung aufweisen, oder wobei sich zwischen zwei Magnetisierungsstreifen (14) jeweils ein unmagnetischer Streifen befindet.

9. Einrichtung nach mindestens einem der vorangehenden Ansprüche, dadurch gekennzeichnet, daß mindestens zwei, bezogen auf die Achse (16) einander gegenüber angeordnete, von der Achse (16) oder der Achsrichtung (12) insbesondere gleich weit entfernte Sensiereinrichtungen (11) vorgesehen sind.

10. Einrichtung nach Anspruch 9, dadurch gekennzeichnet, daß die Sensiereinrichtungen (11) fahrzeugfest derart angeordnet sind, daß die Verbindungslinie von zwei einander gegenüber angeordneten Sensiereinrichtungen (11) parallel oder senkrecht zu der Fahrtrichtung des Fahrzeuges ist.

11. Einrichtung nach mindestens einem der vorangehenden Ansprüche, dadurch gekennzeichnet, daß eine Vielzahl von Magnetisierungsstreifen (14, 15) oder Metallisierungsstreifen, insbesondere 10 bis 100, vorgesehen sind.

12. Einrichtung nach mindestens einem der vorangehenden Ansprüche, dadurch gekennzeichnet, daß der erste Abstand ($b_2$) der Außensensorelemente (4, 4') und der zweite Abstand ($b_1$) der Innensensorelemente (5, 5') derart eingestellt ist, daß die von dem ersten Außensensorelement (4) und dem ersten Innensensorelement (5) abgegebenen Signale gegenüber den von dem zweiten Außensensorelement (4') und dem zweiten Innensensorelement (5') abgegebenen Signalen jeweils eine Phasenverschiebung von zumindest näherungsweise 90° aufweisen.

**Fig. 1**

*Fig. 2*

*Fig. 3*